# EUROPEAN PATENT SPECIFICATION

(11) **EP 1 637 981 B1**
(45) Date of publication and mention of the grant of the patent: **12.06.2019**
(21) Application number: 05017207.1
(22) Date of filing: 08.08.2005
(51) Int. Cl.: G06F 3/033, G06F 3/039

(54) **STRAP EQUIPPED WITH POINTING UNIT**
GURTBAND MIT ZEIGEEINHEIT
SANGLE MUNIE D'UN ÉLÉMENT DE POINTAGE

(30) Priority: 09.09.2004 JP 2004262644
(43) Date of publication of application: 22.03.2006
(73) Proprietor: Nintendo Co., Ltd., Kyoto 601-8501 (JP)
(72) Inventor: Miyamoto, Shigeru, Minami-ku Kyoto 601-8501 (JP); Yamazaki, Hitoshi, Minami-ku Kyoto 601-8501 (JP)
(74) Representative: Lang, Johannes

(56) References cited:
- JP-A- 2001 309 011
- JP-A- 2003 009 932
- JP-A- 2003 033 215
- JP-U- 61 055 738
- US-B1- 6 249 277
- US-B1- 6 587 090

## Description

### BACKGROUND OF THE INVENTION

### Field of the Invention

The present invention relates to a strap and more particularly to a strap equipped with a pointing unit, which is used to provide an input to a touch panel.

### Description of the Background Art

Information processing devices equipped with a touch panel as an input device are already prevalent. In general, an input to a touch panel is performed by a user directly touching an input surface (a panel surface) of the touch panel with one of his or her fingers, or by the user touching the input surface of the touch panel with a dedicated pen (a stylus) . It is known that in common touch panels, it is difficult to accurately detect a point on the panel when an input is performed directly with a finger of a person. Accordingly, especially in a device with a small input surface of the touch panel, like a portable device such as a PDA or the like, a dedicated pen is generally used.

Straps to which is attached a pen dedicated to providing an input to a touch panel have also been devised with a view to preventing loss of the pen (see, for example, Japanese Laid-Open Patent Publication No. 10-177447, Japanese Laid-Open Patent Publication No. 2000-207115, and Japanese Laid-Open Patent Publication No. 2001-236171). Attaching this type of strap to a portable device prevents a user from losing a pen dedicated to providing an input to a touch panel.

Even a portable device equipped with a touch panel normally has provided thereon a button, a switch, or the like as another input device. Naturally, a user has to operate such a button or switch with one of his or her fingers. Therefore, when a pen is used to provide an input to the touch panel, the user has to use the finger when providing an input to the button or switch, and use the pen when providing an input to the touch panel. In other words, the user has to take or release the pen every time he or she switches between the finger and the pen for operation. This renders input operation troublesome.

Further, in recent years, a hand-held game machine equipped with a touch panel has also been devised with a view to, e. g. , providing to a game player a new type of sense when performing operation for game play. In such a hand-held game machine, a user is supposed to perform rapid game operation using both the touch panel and a button. In addition, game operation generally requires more accurate operation than input operation on a PDA. Therefore, in the case where game operation is performed with a hand-held game machine equipped with a touch panel using both the touch panel and a button, a user is unable to perform rapid and accurate game operation if he or she takes or releases a pen as often as necessary. Further, poor operability of such a hand-held game machine may annoy the user. As described above, input operation involving use of both a finger and a pen is undesirable in some cases, especially in a hand-held game machine equipped with a touch panel.

Document JP 2001309011A discloses a strap pen and an electronic unit provided with the same. The intention there is to provide a pen which is a small electronic unit, used when signature data is pen-inputted and is easily adapted to an electronic unit. Therefore, the strap pen includes a pen chip and a plurality of element members. One end of a first strap and one end of a second strap are connected to the pen chip. The first strap and the second strap pass through a plurality of element members and the other ends reach an attaching tool. The strap pen can be used as the flexible strap in a state where the element members are separated. At the time of using it as a pen, a plurality of element members are pressed to the direction of the pen chip and a projection part X and a recessed part Y in the element member are mutually engaged, are integrated by friction force and a pen holder is formed. Thus, a user can realize pen input by holding the pen holder.

Document US 6 587 090 B1 discloses a finger securable computer input device. A stylus computer input device that includes an input mechanism that is secured to the fingertip pad of a user's index finger is disclosed. In one embodiment, the computer input device includes a splint structure, a fingertip strap assembly attached to the tip end of the splint structure, two opposed switch button assemblies each extending from an opposed side center edge of the splint structure and having a switch button provided thereon, two winged rear support arms extending from opposed rear side edges of the splint assembly and shaped to extend back over a back portion of a user's hand; and an information input mechanism. Because the input device is secured to the finger with straps and winged support arms, the user does not have to put the stylus input device with his her fingers and is thus relieved of this strain to the fingers and hand.

Document US 6 249 277 B1 discloses a finger stylus for a touch screen including a flexible non-metallic elastic ring or a flexible, fabric-like strap having distal ends, each of the distal ends including parts of an interconnect fastener such as a hooks and loops or magnetic fastener. The ring or strap forms a wraparound for a human fingertip such that, in use, the bonding of the interconnect fastener parts about the fingertip or the elasticity of the ring firmly hold the strap against the fingertip. The ring or strap includes an intermediate portion including a loop-hole extending from an exterior surface of the intermediate portion which receives a longitudinal stylus rod extending through the loophole in a semi-fiction-fit connection with the loophole. The rod in use is positioned to extend through the loophole generally transversely to the strap and above and beyond a user's fingertip for touching a touch screen. The stylus rod is made of a non-marking material with generally rounded shaped ends.

### SUMMARY OF THE INVENTION

Therefore, an object of the present invention is to provide a strap equipped with a pointing device with an excellent operability, which makes it easy to provide an input to a touch panel on a portable device or the like.

In order to solve the problems as stated above, the present invention has adopted the following structures. Note that reference numerals, supplementary explanations, and the like within parentheses show correspondence with an embodiment described below to facilitate understanding of the present invention, and do not limit the present invention in any manner.

A first aspect of the present invention is directed to a strap comprising a string-shaped unit (11), an attachment structure (12), a pointing unit (13, 31, or 41), and a loop forming structure (a ring-shaped unit 14). The attachment structure is used to attach the string-shaped unit to an arbitrary device. The pointing unit is provided on the string-shaped unit in a movable or fixed manner. The pointing unit, when in use, is caused to become in contact with a panel surface of a touch panel. The loop forming structure forms a loop with the string-shaped unit such that the loop includes a point at which the pointing unit is provided and a size of the loop is variable.

In a second aspect of the present invention, the loop forming structure may be a ring-shaped unit (14) having a hole. In this case, the ring-shaped unit presses a first arbitrary portion of the string-shaped unit and a second arbitrary portion of the string-shaped unit against each other with a predetermined pressure, as a result of the first and second arbitrary portions being positioned to be inside the hole of the ring-shaped unit, wherein the second arbitrary portion is located on an opposite side of the point at which the pointing unit is provided in relation to the first arbitrary portion.

In a third aspect of the present invention, the loop forming structure may be a ring-shaped unit fixed to an end of the string-shaped unit and having a hole. In this case, the ring-shaped unit presses the end of the string-shaped unit and an arbitrary portion of the string-shaped unit against each other with a predetermined pressure, as a result of the arbitrary portion of the string-shaped unit being positioned to be inside the hole of the ring-shaped unit, wherein the arbitrary portion of the string-shaped unit is located on an opposite side of the point at which the pointing unit is provided in relation to the end of the string-shaped unit.

In a fourth aspect of the present invention, the string-shaped unit may be capable of expansion and contraction. In this case, the loop forming structure fixes a first arbitrary portion of the string-shaped unit and a second arbitrary portion of the string-shaped unit to each other, the second arbitrary portion being located on an opposite side of the point at which the pointing unit is provided in relation to the first arbitrary portion.

A fifth aspect of the present invention is directed to a strap comprising a string-shaped unit (11), an attachment structure (12), a pointing unit 13, 31), and an attaching/detaching structure (a hook and loop fastener 61). The attachment structure is used to attach the string-shaped unit to an arbitrary device. The pointing unit is provided on the string-shaped unit in a movable or fixed manner. The pointing unit, when in use, is caused to become in contact with a panel surface of a touch panel. The attaching/detaching structure freely attaches or detaches a first portion of the string-shaped unit to or from a second portion of the string-shaped unit, the second portion being located on an opposite side of a point at which the pointing unit is provided in relation to the first portion. In this strap, if the first portion and the second portion are attached to each other by the attaching/detaching structure, a loop is formed with the string-shaped unit.

In a sixth aspect of the present invention, at least one of the first portion and the second portion may be an arbitrary portion of the string-shaped unit. In this case, changing a position of at least one of the first portion and the second portion varies a size of the loop formed with the string-shaped unit.

In a seventh aspect of the present invention, the attaching/detaching structure may be a hook and loop fastener provided on the first portion and the second portion, a hook and eye provided on the first portion and the second portion, or buttons provided on the first portion and the second portion.

In an eighth aspect of the present invention, the pointing unit may have a shape with a convex portion (13a, 31a) positioned close to the string-shaped unit.

In a ninth aspect of the present invention, the pointing unit may have a board-like shape with a flat portion (13b) positioned on an opposite side of the string-shaped unit in relation to the convex portion.

In a tenth aspect of the present invention, the pointing unit may be formed so that a contact surface of the pointing unit at which the pointing unit becomes in contact with the panel surface has a spherical shape (31a).

In the above-described first aspect, one of the fingers of a user's is inserted into the loop, and the pointing unit is worn on the finger of the user's in a fixed manner by adjusting the size of the loop. Thus, the user is able to perform game operation using a button, with the pointing unit worn on the finger. In the conventional case where a pen is employed, the user has to take or release the pen when switching between the button and the touch panel for operation. In comparison, in the present aspect, operation to be performed when switching between the button and the touch panel for operation is made easier. Thus, there is provided a strap equipped with a pointing device with an excellent operability, which makes it easy to provide an input to a touch panel of a portable device. The strap in this aspect is especially effective in the case where the means for operation is frequently switched between the button and the touch panel as when performing game operation with a hand-held game machine.

In the second aspect, the size of the loop is capable of being freely adjusted by using the ring- shaped unit. Therefore, a user is able to wear the pointing unit so that the pointing unit fits a finger of the user's regardless of the size and shape of the finger. For example, the pointing unit and the string-shaped unit are capable of fitting both a finger of an adult and a finger of a child.

In the third aspect, as in the second aspect, a user is able to wear the pointing unit so that the pointing unit fits a finger of the user's regardless of the size and shape of the finger. In addition, for the same length of the string-shaped unit, the entire length of the strap can be longer than in the case of the above-described second aspect.

In the fourth aspect, expansion and contraction of the string-shaped unit itself makes it possible for a user to wear the pointing unit so that the pointing unit fits a finger of the user's regardless of the size and shape of the finger.

In the fifth aspect, inserting a finger of a user's into the loop formed by the attaching/detaching structure makes it possible to wear the pointing unit on the finger of the user's in a fixed manner. As a result, as in the first aspect, the user is able to perform game operation using a button, with the pointing unit worn on the finger. Thus, there is provided a strap equipped with a pointing device with an excellent operability, which makes it easy to provide an input to a touch panel of a portable device.

In the sixth aspect, since the size of the loop is variable, it is possible for a user to wear the pointing unit so that the loop fits a finger of the user's regardless of the size and shape of the finger. For example, the pointing unit and the string-shaped unit are capable of fitting both a finger of an adult and a finger of a child.

In the seventh aspect, the attaching/detaching structure is realized by a simple structure.

In the eighth aspect, when a user provides an input to a touch panel using the pointing unit, the pointing unit and a panel surface of the touch panel become in contact at a single point. Therefore, it is possible to provide an accurate input to the touch panel. Also, since the convex surface of the pointing unit is positioned close to the string-shaped unit, the user is able to perform operation with a sense that he or she were operating the touch panel with a finger.

In the ninth aspect, it is possible to prevent a user from feeling uncomfortable when the user lays one of his or her fingers on the pointing unit.

In the tenth aspect, the panel surface of the touch panel and the pointing unit become in contact at a single point. Therefore, it is possible to accurately specify a single point on the panel surface by using the pointing unit.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a perspective view illustrating an external appearance of a strap 1 according to an embodiment of the present invention;
FIG. 2A, FIG. 2B, FIG. 2C, FIG. 2D, and FIG. 2E are six-view drawings of the strap 1 illustrated in FIG. 1;
FIG. 3 is an illustration of the strap 1 attached to a portable device;
FIG. 4A and FIG. 4B are illustrations of a pointing unit 13;
FIG. 5 is an illustration of the strap 1, in which a ring-shaped unit 14 has been moved along a string-shaped unit 11;
FIG. 6 is an illustration of the strap 1 worn on a finger;
FIG. 7 is an illustration of how a game operation is performed using the strap 1;
FIG. 8A and FIG. 8B are illustrations of a first variant of the pointing unit according to the embodiment of the present invention;
FIG. 9A and FIG. 9B are illustrations of a variant of the pointing unit which is not an embodiment of the present invention;
FIG. 10 is a partial perspective view of a strap which is not an embodiment of the present invention, illustrating the ring-shaped unit and its vicinity; and
FIG. 11 is a perspective view illustrating an external appearance of a strap which is not an embodiment of the present invention.

### DESCRIPTION OF THE PREFERRED EMBODIMENTS

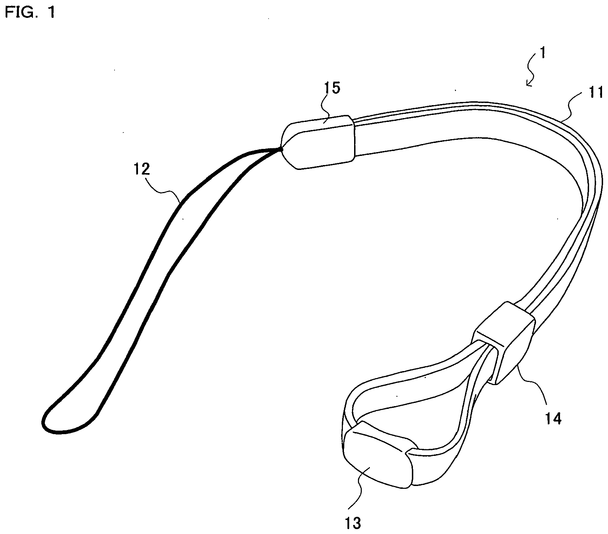

Hereinafter, a strap according to an embodiment of the present invention will be described. FIG. 1 is a perspective view illustrating an external appearance of a strap 1 according to the present embodiment. As illustrated in FIG. 1, the strap 1 includes a string-shaped unit 11, an attachment string 12, a pointing unit 13, a ring-shaped unit 14, and a fastener 15. When in use, the strap 1 is attached to a portable device that is equipped with a touch panel. The strap 1 is used as a suspender to be held by a user when carrying the portable device, and in addition, is used for the user to provide an input to the touch panel of the portable device. Hereinafter, a structure of the strap 1 will be described.

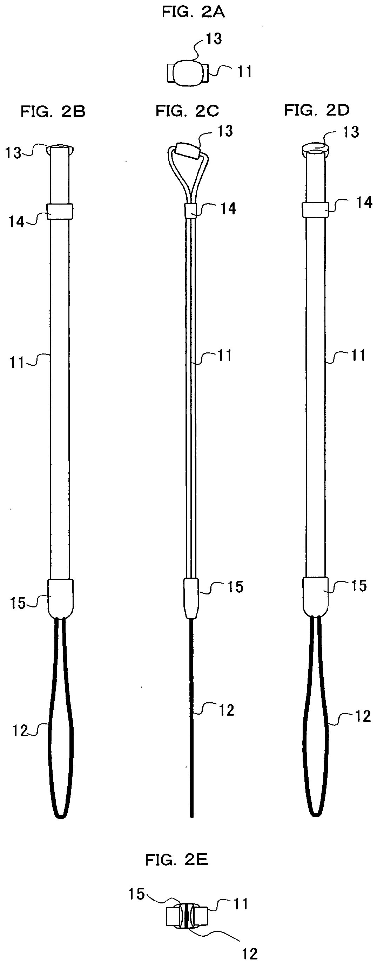

FIG. 2A to FIG. 2E are six-view drawings of the strap 1 illustrated in FIG. 1. Specifically, FIG. 2A is a front view, FIG. 2B is a top view, FIG. 2C is a side view, FIG. 2D is a bottom view, and FIG. 2E is a back view. Note that, since a right side view and a left side view are symmetrical to each other, only one of the two side views is provided in FIG. 2A to FIG. 2E, while the other side view is omitted from illustration.

The string-shaped unit 11 is a unit which serves as a suspender when the user carries the portable device, to which the strap 1 is attached. In other words, the user is able to carry the portable device by, for example, holding the string-shaped unit 11, or winding the string-shaped unit 11 around one of his or her hands. In the present embodiment, the string-shaped unit 11 is in a belt-like form. However, in another embodiment, the string- shaped unit 11 may be formed such that a cross section thereof has a substantially round shape. Two ends of the string-shaped unit 11 are fastened together by the fastener 15.

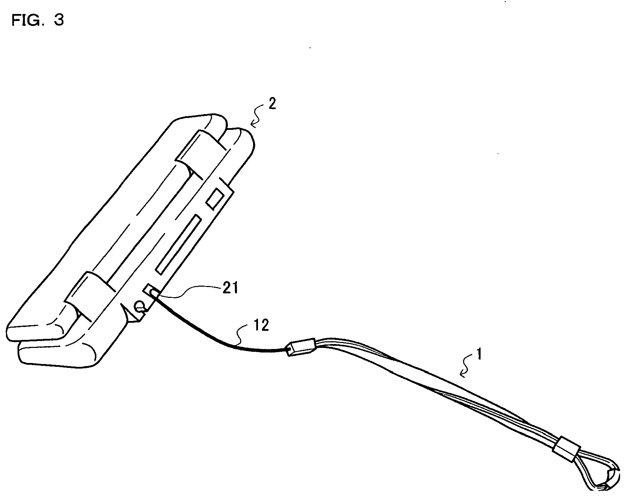

In addition, the attachment string 12 is attached to the fastener 15. That is, the attachment string 12 is connected to the string-shaped unit 11 via the fastener 15. The attachment string 12 is an exemplary attachment structure for attaching the strap 1 to the portable device. FIG. 3 is an illustration of the strap 1 attached to a portable device. As illustrated in FIG. 3, the strap 1 is attached to a hand-held game machine 2 by passing the attachment string 12 through a hole 21 provided at an arbitrary location of the hand-held game machine 2, which is an exemplary portable device, and then tying the attachment string 12. Note that although the attachment structure used in the present embodiment is the attachment string 12, any structure may be used as the attachment structure as long as the attachment structure is usable to attach the strap to the portable device.

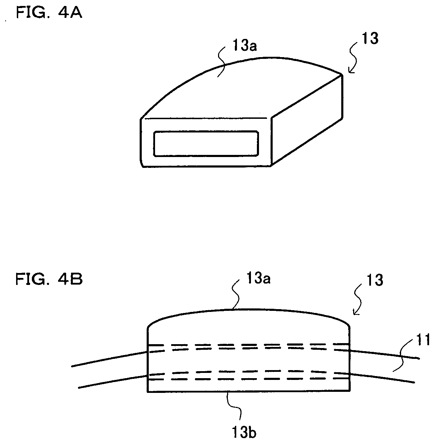

Returning back to explanation of FIG. 1 and FIG. 2A to FIG. 2E, the pointing unit 13 is attached to the string-shaped unit 11. The pointing unit 13 is used by the user to provide an input to the touch panel when the strap 1 is attached to the portable device. FIG. 4A and FIG. 4B are illustrations of the pointing unit 13. Specifically, FIG. 4A is a perspective view of the pointing unit 13. As illustrated in FIG. 4A, the pointing unit 13 has a tubular shape with a hole at the center thereof. The external shape of a vertical cross section taken across the hole of the pointing unit 13 is a rectangle which is long sideways. In other words , the external shape of the pointing unit 13 resembles that of a board.

FIG. 4B is a side view of the pointing unit 13. As illustrated in FIG. 4B, the string-shaped unit 11 is passed through the hole of the pointing unit 13. In FIG. 4B, the hole and a part of the string-shaped unit 11 inside the hole are indicated by dotted lines . The pointing unit 13 is attached to the string-shaped unit 11 by passing the string-shaped unit 11 through the hole. Therefore, in the present embodiment, it is possible to move the pointing unit 13 to an arbitrary position on the string-shaped unit 11 by sliding the pointing unit 13 along the string-shaped unit 11. Note that, in another embodiment, the pointing unit 13 may be attached to the string-shaped unit 11 in a fixed manner.

In addition, as illustrated in FIG. 4B, the pointing unit 13, which has a board-like shape, is formed so that one surface (i.e., a top surface 13a) thereof is convex. In other words, on the pointing unit 13 is provided a convex surface that faces outwardly from the center of the string-shaped unit 11. When the user provides an input to the touch panel, the user uses the pointing unit 13 such that the top surface 13a thereof is in contact with an input surface of the touch panel (the details are described later). Since the top surface 13a is convex, the input surface of the touch panel and the top surface 13a will become in contact at a single point. In the case where the user provides an input to the touch panel using one of his or her fingers, it is impossible to provide an accurate input to the touch panel because the finger and the input surface will become in contact on an area (instead of at a single point). In contrast, in the case where the user provides an input to the touch panel using the pointing unit 13, the user is able to specify a single point on the input surface of the touch panel to provide an accurate input to the touch panel because the convex surface of the pointing unit 13 and the input surface of the touch panel become in contact at a single point.

In addition, as illustrated in FIG. 4B, the pointing unit 13 is formed so that another surface (i.e., a bottom surface) 13b thereof is flat. When providing an input to the touch panel, the user uses the pointing unit 13 such that a ball of one of his or her fingers is laid on the bottom surface 13b (the details will be described later). If the bottom surface 13b were convex or concave, the user would feel uncomfortable when the user lays one of his or her fingers on the pointing unit 13. This is because the shape and size of a finger are different from one user to another. Therefore, in the present embodiment, the pointing unit 13 is formed so that the bottom surface 13b thereof is flat lest the user should feel uncomfortable when providing an input to the touch panel.

In another embodiment, a structure for preventing slide may be further provided on the flat bottom surface 13b. The structure for preventing slide is, for example, a groove or a plurality of small projections or holes provided on the bottom surface 13b. Providing the structure for preventing slide on the bottom surface 13b will result in increased friction between the finger and the pointing unit 13, whereby the pointing unit 13 becomes less likely to slide.

Returning back to explanation of FIGS. 1 and 2, the ring-shaped unit 14 is attached to the string-shaped unit 11. The ring-shaped unit 14 has a ring shape with a hole at the center thereof. The ring-shaped unit 14 is attached to the string-shaped unit 11 by passing the string-shaped unit 11 through the hole. Here, two portions of the string-shaped unit 11 are passed through the hole of the ring-shaped unit 14. Specifically, two portions of the string-shaped unit 11, each of the two portions being located on a mutually opposite side of the pointing unit 13, are positioned to be inside the hole of the ring-shaped unit 14. More specifically, an arbitrary portion (a first portion) of the string-shaped unit 11 and another arbitrary portion (a second portion) of the string-shaped unit 11, the second portion being located on the opposite side of a point at which the pointing unit 13 is attached to the string-shaped unit 11 in relation to the first portion, are positioned to be inside the hole of the ring-shaped unit 14. Thus, the ring-shaped unit 14 presses the two portions (i.e. , the first portion and the second portion) of the string-shaped unit 11, the two portions being located on the mutually opposite side of the point at which the pointing unit 13 is attached to the string-shaped unit 11, against each other with a predetermined pressure. Therefore, the size of the hole of the ring-shaped unit 14 is arranged so that passing the two portions of the string-shaped unit 11 through the hole will result in the two portions being pressed against each other with the predetermined pressure. Note that the predetermined pressure may be a pressure which prevents the ring-shaped unit 14 from spontaneously sliding along the string-shaped unit 11. For example, a pressure which prevents gravity from sliding the ring-shaped unit 14 may be applied to the above-described two portions of the string-shaped unit 11. Thus, a person is able to move the ring-shaped unit 14 along the string-shaped unit 11 by applying a certain amount of force to the ring-shaped unit 14. Note that a phrase "pressing two portions of the string-shaped unit 11 against each other" as used herein does not mean fixing the two portions of the string-shaped unit 11 together so as to prevent any movement. The ring-shaped unit 14 may position the two portions of the string-shaped unit 11 so that application of force as great as that of gravity to the ring-shaped unit 14 would not change the positions of the two portions. As described above, in the strap 1 according to the present embodiment, it is possible to slide the ring-shaped unit 14 along the string-shaped unit 11.

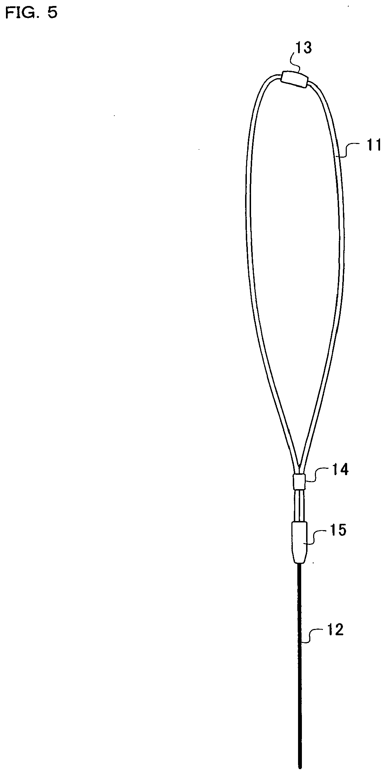

Next, an explanation of using the strap having the above structure will be provided. FIG. 5 is an illustration of the strap where the ring-shapedunit 14 has been moved along the string-shaped unit 11. FIG. 5 is a side view of the strap, but different from FIG. 2C in the position of the ring-shaped unit 14. Here, since two different portions of the string-shaped unit 11 are connected to each other by being pressed against each other by the ring-shaped unit 14, the ring-shaped unit 14 is capable of forming a loop with the string-shaped unit 11. Further, since the ring-shaped unit 14 is capable of being moved along the string-shaped unit 11, the size of the loop is variable. Thus, in the strap 1 according to the present embodiment, it is possible to adjust the size of the loop formed with the string-shaped unit 11 by moving the ring-shaped unit 14. Further, as described above, since the ring-shaped unit 14 connects two portions of the string-shaped unit 11, which are each located on a mutually opposite side of the point at which the pointing unit 13 is attached to the string-shaped unit 11, the loop includes the point at which the pointing unit 13 is attached to the string-shaped unit 11.

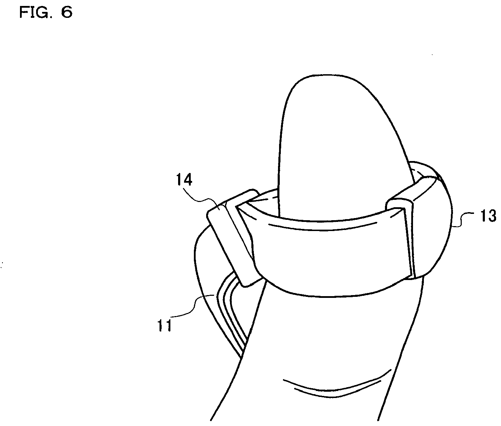

When providing an input to the touch panel, the user inserts one of his or her fingers into the loop formed with the string-shaped unit 11. FIG. 6 is an illustration of the strap worn on the finger. The user inserts the finger into the loop and positions the pointing unit 13 at or near a ball of the finger. Then, the user adjusts the position of the ring-shaped unit 14 in order to change the size of the loop so that the loop fits the finger. In this manner, the pointing unit 13 is fixed on the finger. Thus, the user is able to fix the pointing unit 13 at a desired location on the finger without having to hold the strap by himself or herself.

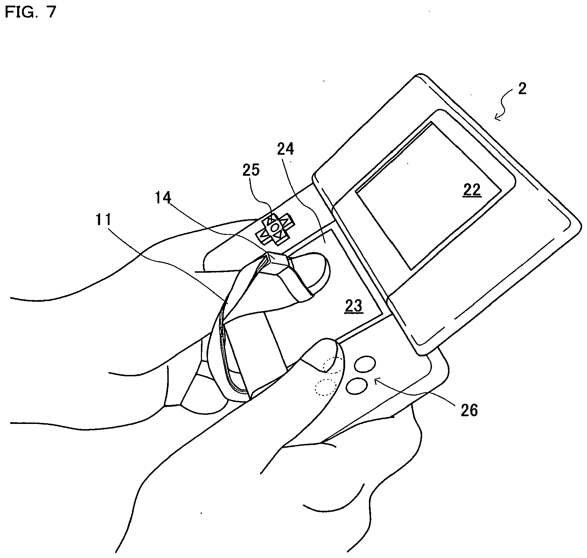

FIG. 7 is an illustration of how a game operation is performed using the strap 1. In FIG. 7, the hand-held game machine 2 includes two liquid crystal displays (hereinafter referred to as "LCDs") 22 and 23, and a touch panel 24 is provided on a second LCD 23, which is provided below a first LCD 22. The present embodiment is described with reference to an exemplary case where the strap is attached to the hand-held game machine 2 illustrated in FIG. 7. However, the strap 1 may be attached to any portable device that includes at least a touch panel.

Before playing a game with the hand-held game machine 2, the user wears the pointing unit 13 of the strap 1, which is attached to the hand-held game machine 2, on a finger as illustrated in FIG. 6. Then, the user starts playing the game with the pointing unit 13 worn on the finger. During game play, the user holds the hand-held game machine 2 with both hands such that a thumb of his or her left hand is positioned on or near a cross button 25 and a thumb of his or her right hand is positioned on or near round buttons 26, exactly as he or she does when performing an operation using buttons (see FIG. 7). When performing a game operation using buttons, the user performs the game operation while holding the hand-held game machine 2 with both of his or her hands as illustrated in FIG. 7. Specifically, the user performs the game operation by pressing the buttons using thumbs of both the hands. At this time, since the pointing unit 13 is fixed to the finger (see FIG. 6), the user is able to perform the game operation using the buttons with the pointing unit 13 worn on the finger. On the other hand, when performing a game operation using the touch panel 24, the user performs the game operation by moving on the touch panel 24 the finger on which the pointing unit 13 is worn. As illustrated in FIG. 7, in the case where the pointing unit 13 is worn on a thumb of the user's, the user is able to perform a game operation using the touch panel 24 while holding the hand-held game machine 2 with both the hands. Even in the case where the pointing unit 13 is worn on a finger other than the thumbs, if the user moves a hand on which the pointing unit 13 is worn off the hand-held game machine 2, the user is able to perform a game operation using the touch panel readily. As described above, use of the strap 1 according to the present embodiment results in easier operation when switching between the buttons and the touch panel for operation, as compared with the case where a pen is employed when performing an operation using the touch panel.

It is required that the pointing unit 13 be capable of becoming in contact with any point on the input surface of the touch panel 24 in a situation where the strap 1 is attached to the hand-held game machine 2. Therefore, in the case where a portable device to which the strap 1 is to be attached is identified beforehand, the length of the string-shaped unit 11 and a point at which the pointing unit 13 is attached to the string-shaped unit 11 should be set so that the pointing unit 13 will be capable of becoming in contact with any point on the input surface of the touch panel 24 in the aforementioned situation.

As described above, the present embodiment enables the user to wear the pointing unit 13 on one of his or her fingers in a fixed manner. Accordingly, the user is able to perform a game operation using the buttons with the pointing unit 13 worn on the finger, and thus an operation to be performed when switching between the buttons and the touchpanel for operation is made easier. In other words, it is made considerably easier for the user to provide an input to the touch panel of the portable device. Further, since the pointing unit 13 is fixed to the finger by using a loop formed with the string-shaped unit 11, it is possible to fix the pointing unit 13 to the finger without a special structure being required.

Further, in the present embodiment, the pointing unit 13 has a convex surface. Therefore, use of the pointing unit 13 makes it possible to provide an accurate input to the touch panel. Still further, since the pointing unit 13 has a shape resembling that of a thin board, the position of an input point on the touch panel (i. e. , a point at which the pointing unit 13 becomes in contact with the input surface of the touch panel) becomes close to the position of the finger. Therefore, the user is able to provide an input to the touch panel with a sense that he or she were providing the input to the touch panel using one of his or her fingers . Thus , the present embodiment enables the user to perform an input operation on the touch panel easily and accurately.

Note that the shape of the pointing unit may be any shape as long as the shape is suitable for providing an input to the touch panel with the pointing unit worn on a finger. It is preferable that the pointing unit should have a shape with a convex surface which enables the pointing unit to become in contact with the input surface of the touch panel at a single point. For example, it is also preferable that the point at which the pointing unit 13 and the input surface of the touch panel become in contact should be close to the position of the finger so that the user is able to perform an operation with a sense that he or she were performing the operation using one of his or her fingers. Specifically, it is preferable that the pointing unit should be formed so that the convex surface of the pointing unit is positioned close to the string-shaped unit. It is also preferable that the pointing unit should be formed so that the convex surface of the pointing unit will be positioned over the string-shaped unit. With the above points in view, variants of the pointing unit will now be described as variants in the present embodiment.

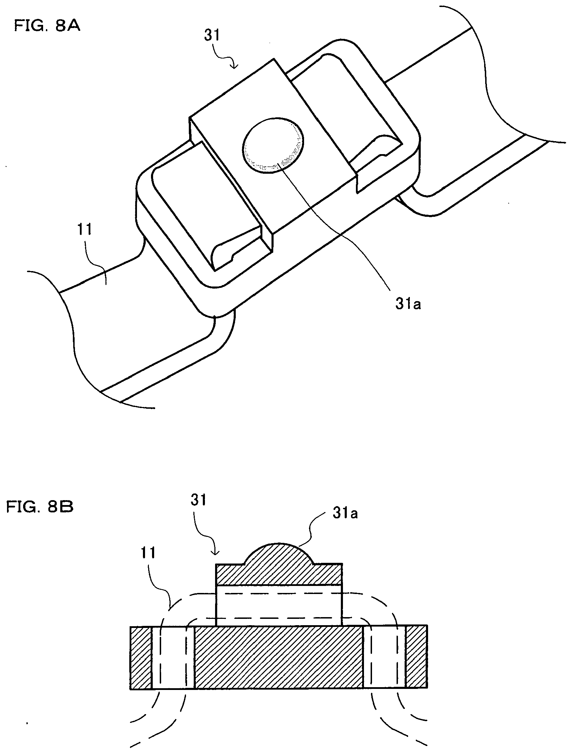

FIG. 8A and FIG. 8B are illustrations of a first variant of the pointing unit according to the present embodiment. Specifically, FIG. 8A is a partial perspective view of the strap illustrating a pointing unit 31 and its vicinity, and FIG. 8B is a cross-sectional view of the pointing unit 31. As illustrated in FIG. 8A, similar to the pointing unit 13 in the above-described embodiment, the pointing unit 31 has a shape resembling that of a board. In the pointing unit 31, the above-described convex surface is formed by a projection 31a provided on a flat surface. Like this example, the convex surface provided on the pointing unit may be a projection provided on a part of the pointing unit having a board-like shape. Note that the projection 31a, which is formed to have a spherical shape, enables the user to accurately specify a single point on the input surface of the touch panel. pointing unit 31, and the pointing unit 31 is attached to the string-shaped unit 11 by passing the string-shaped unit 11 through these three holes. This results in an increased friction between the pointing unit 31 and the string-shaped unit 11 as compared with the case of the above-described embodiment, and therefore, the pointing unit 31 is fixed to the string-shaped unit 11 more firmly. In the case where there is a desire to freely adjust the position of the pointing unit on the string-shaped unit according to the user's will, the desire is satisfied by providing only a single hole in the pointing unit as in the above-described embodiment.

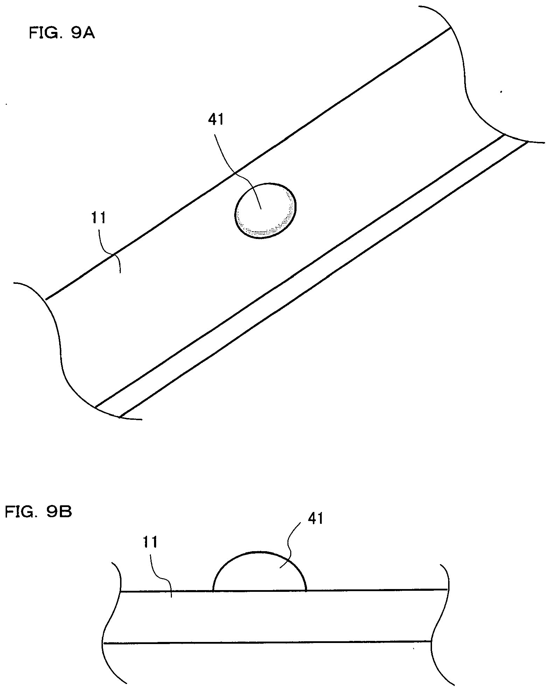

FIG. 9A and FIG. 9B are illustrations of a comparative variant of a pointing unit which is not an embodiment of the invention. Specifically, FIG. 9A is a partial perspective view of the strap illustrating a pointing unit 41 and its vicinity, and FIG. 9B is a cross-sectional view of the pointing unit 41. As illustrated inFIG. 9B, the pointing unit 41 is formed by ahemispheric projection portion alone. In FIG. 9A and FIG. 9B, the pointing unit 41 is directly adhered to the string-shaped unit 11 by using an adhesive or the like. As shown above, the pointing unit 41 may be attached to the string-shaped unit 11 in any manner.

Also, in the above-described variant, in order to render the size of the loop formed with the string-shaped unit 11 variable, the ring-shaped unit 14, which is capable of moving along the string-shaped unit 11, is employed. In the case where the string-shaped unit 11 is formed of a material capable of expansion and contraction, such as rubber, two predetermined portions of the string-shaped unit 11 may be connected to each other in a fixed manner to form the loop with the string-shaped unit 11. This is because the expansion and contraction of the string-shaped unit 11 renders the size of the loop variable.

Also, in the above-described variant, the ring-shaped unit 14 is employed as a means for forming the loop whose size is variable and which is formed with the string-shaped unit 11. In another embodiment, the means for forming the loop may be anything as long as it is capable of detachably connecting two portions of the string-shaped unit 11 together. Examples of the means for forming the loop include members which are capable of connecting two portions of the string-shaped unit 11 together, such as a hook and loop fastener, a hook and eye, buttons, and the like. Attaching such a member to a desired location on the string-shaped unit 11 makes it possible to connect two portions of the string-shaped unit 11 together at the desired location, whereby it is made possible to form the loop whose size is variable with the string-shaped unit 11.

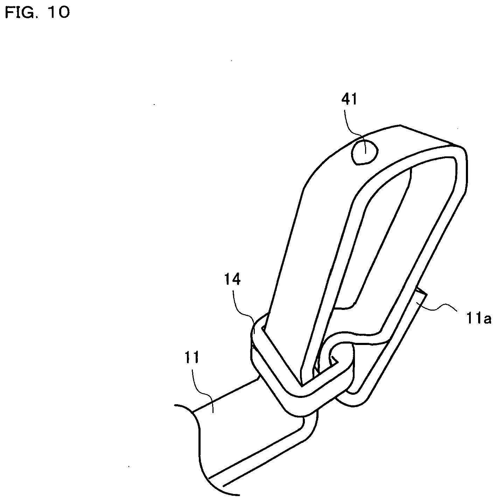

Also, in the above-described embodiment, the ring-shaped unit 14 presses two arbitrary portions of the string-shaped unit 11 against each other, thereby connecting the two portions together. In another embodiment, it maybe so arranged that the ring-shaped unit 14 is fixed to a single arbitrary portion of the string-shaped unit 11 and, in addition, that the ring-shaped unit 14 connects this portion to another arbitrary portion of the string-shaped unit 11. FIG. 10 is a partial perspective view of the strap of the comparative variant which is no an embodiment of the present invention illustrating the ring-shaped unit and its vicinity. In FIG. 10, an end of the string-shaped unit 11 is adhered to a portion thereof close to the end, whereby a loop is formed. This loop is passed through the hole of the ring-shaped unit 14, whereby the ring-shaped unit 14 is fixed to a portion of the string-shaped unit 11 close to the end of the string-shaped unit 11. Further, another portion of the string-shaped unit 11 is passed through the hole of the ring-shaped unit 14, the portion being different from the portion thereof to which the ring-shaped unit 14 is fixed and which is close to the end of the string-shaped unit 11. The pointing unit 41 is attached to a location on a loop that is formed by the ring-shaped unit 14 with the string-shaped unit 11. The other end of the string-shaped unit 11, which is not shown in the figure, is fixed by the fastener 15. The structure of FIG. 10 as described above makes it possible to use the ring-shaped unit 14 to form a loop with the string-shaped unit 11, and to freely adjust the size of the loop by moving the ring-shaped unit 14.

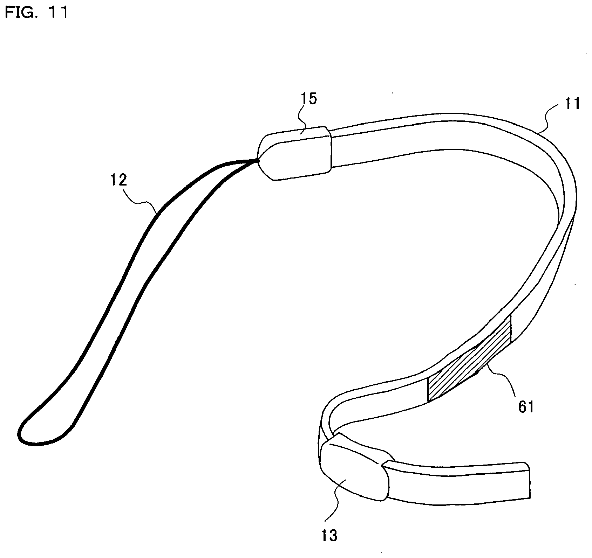

Also, in the above-described variant, the ring-shaped unit 14 is used to form a loop whose size is variable with the string-shaped unit 11. In another comparative variant which is not an embodiment of the invention, the loop formed with the string-shaped unit 11 may be formed by fixing two predetermined portions of the string-shaped unit 11 together. FIG. 11 is a perspective view illustrating an external appearance of a strap according to the other comparative variant which is not an embodiment of the present invention. In FIG. 11, the component elements of the strap which are also illustrated in FIG. 1 are attached with the same reference numerals as in FIG. 1.

The strap as illustrated in FIG. 11 is different from that of FIG. 1 in that only one end of the string-shaped unit 11 is fixed by the fastener 15 and the other end thereof is free. Also, the strap illustrated in FIG. 11 includes a first hook and loop fastener 61 instead of the ring-shaped unit 14. Although not shown in the figure, a second hook and loop fastener, which is to be detachably adhered to the first hook and loop fastener 61, is attached to the free end of the string-shaped unit 11. This makes it possible to detachably connect two portions of the string-shaped unit 11 together, i.e., the portion to which the first hook and loop fastener 61 is attached and the portion to which the second hook and loop fastener is attached. As a result, when the first hook and loop fastener 61 and the second hook and loop fastener are adhered to each other, a loop is formed with the string-shaped unit 11. When the user wears the pointing unit 13 on one of his or her fingers, the user forms a loop with the string-shaped unit 11 by adhering the first hook and loop fastener 61 and the second hook and loop fastener together. Then, the user wears the pointing unit 13 on the finger by inserting the finger into the loop.

As illustrated in FIG. 11, the comparative variant does not require that a loop formed with the string-shaped unit 11 should be formed at all times. Instead, it may be so arranged that a loop is formed only when necessary (i.e., when the user wears the pointing unit 13 on one of his or her fingers) . In this example, only one end of the string-shaped unit 11 is fixed by the fastener. Therefore, for the same length of the string-shaped unit, the entire length of the strap can be made longer than in the case of the above-described embodiment.

Also, in FIG. 11, a hook and loop fastener is employed as a means for connecting the free end of the string-shaped unit 11 and a predetermined portion of the string- shaped unit 11 together . However, the means for connecting two portions of the string-shaped unit 11 is not limited to the hook and loop fastener, but may be, for example, a hook and eye, buttons, or the like.

The strap according to the present invention is usable, for example, as a strap for a portable device equipped with a touch panel.

## Claims

1. A strap comprising: a string-shaped unit (11);
an attachment structure (12) for attaching the string-shaped unit to an arbitrary device;
a pointing unit (13, 31) provided on the string-shaped unit in a movable manner and to be caused to become in contact with a panel surface of a touch panel; and
a loop forming structure (14) for forming the string-shaped unit (11) into a variable sized finger handle loop, a portion of which loop has the pointing unit included in a manner to be able to contact with the touch panel wherein the loop forming structure is a ring-shaped unit having a hole, and the ring-shaped unit presses a first arbitrary portion of the string-shaped unit and a second arbitrary portion of the string-shaped unit against each other with a predetermined pressure, as a result of the first and second arbitrary portions being positioned to be inside the hole of the ring-shaped unit, wherein the second arbitrary portion is located on an opposite side of the point at which the pointing unit is provided in relation to the first arbitrary portion, and
wherein the ring shaped unit is capable of being slidably moveable along the string shaped unit such that the size of the loop is variable.

2. The strap according to claim 1, wherein, the string-shaped unit is capable of expansion and contraction, and
the loop forming structure fixes the first arbitrary portion of the string-shaped unit and the second arbitrary portion of the string-shaped unit to each other, the second arbitrary portion being located on an opposite side of the point at which the pointing unit is provided in relation to the first arbitrary portion.

3. The strap according to claim 1, wherein the pointing unit has a shape with a convex portion positioned close to the string-shaped unit.

4. The strap according to claim 3, wherein the pointing unit has a board-like shape with a fiat portion positioned on an opposite side of the string-shaped unit in relation to the convex portion.

5. The strap according to claim 1, wherein the pointing unit is formed so that a contact surface of the pointing unit at which the pointing unit becomes in contact with the panel surface has a spherical shape.

## Patentansprüche

1. Band, umfassend:
eine schnurförmige Einheit (11);
eine Befestigungsstruktur (12) zum Befestigen der schnurförmigen Einheit an einer beliebigen Vorrichtung;
eine Zeigeeinheit (13, 31), die an der schnurförmigen Einheit auf eine bewegbare Weise bereitgestellt ist und eine Panel Oberfläche eines Touch Panels kontaktieren soll; und
eine Schlaufenbildungsstruktur (14) zum Bilden der schnurförmigen Einheit (11) zu einer Fingergriffschlaufe variabler Größe, wobei ein Abschnitt der Schlaufe die Zeigeeinheit aufweist, die auf eine Weise beinhaltet ist, dass sie das Touch Panel kontaktieren kann,
wobei die Schlaufenbildungsstruktur eine ringförmige Einheit mit einem Loch ist, und die ringförmige Einheit einen ersten beliebigen Abschnitt der schnurförmigen Einheit und einen zweiten beliebigen Abschnitt der schnurförmigen Einheit mit einem vorbestimmten Druck gegeneinander drückt,
als Folge davon, dass der erste und zweite beliebige Abschnitt so positioniert sind, sodass Sie sich innerhalb des Lochs der ringförmigen Einheit befinden,
wobei der zweite beliebige Abschnitt sich an einer gegenüberliegenden Seite des Punktes befindet, an dem die Zeigeeinheit bereitgestellt ist in Bezug auf den ersten beliebigen Abschnitt, und
wobei die ringförmige Einheit dazu in der Lage ist, gleitend entlang der schnurförmigen Einheit bewegbar zu sein sodass die Größe der Schlaufe variable ist.

2. Band gemäß Anspruch 1, wobei die schnurförmige Einheit zu Expansion und Kontraktion in der Lage ist, und die Schlaufenbildungsstruktur den ersten beliebigen Abschnitt der schnurförmigen Einheit und den zweiten beliebigen Abschnitt der schnurförmigen Einheit aneinander fixiert, wobei der zweite beliebige Abschnitt sich an der gegenüberliegende Seite des Punkts befindet, an dem die Zeigeeinheit bereitgestellt ist in Bezug auf den ersten beliebigen Abschnitt.

3. Band gemäß Anspruch 1, wobei die Zeigeeinheit eine Form mit einem konvexen Abschnitt aufweist, die nah an der schnurförmigen Einheit positioniert ist.

4. Band gemäß Anspruch 3, wobei die Zeigeeinheit eine brettähnliche Form mit einem flachen Abschnitt aufweist, die an einer gegenüberliegenden Seite der schnurförmigen Einheit in Bezug auf den konvexen Abschnitt positioniert ist.

5. Band gemäß Anspruch 1, wobei die Zeigeeinheit so gebildet ist, dass eine Kontaktoberfläche der Zeigeeinheit, an der die Zeigeeinheit in Kontakt mit der Panel Oberfläche kommt, eine sphärische Form hat.

## Revendications

1. Une dragonne comprenant :
une unité en forme de cordon (11) ;
une structure de maintien (12) destinée à maintenir l'unité en forme de cordon sur un dispositif quelconque ;
une unité de pointage (13, 31) disposée sur l'unité en forme de cordon selon une configuration mobile et qui peut être amenée au contact d'une surface de panneau d'un panneau tactile ; et
une structure de formation de boucle (14) pour conformer l'unité en forme de cordon (11) en une boucle de dimension variable à enfiler autour du doigt, boucle dont une partie inclut l'unité de pointage de manière à pouvoir venir en contact avec le panneau tactile, la structure de formation de boucle étant une unité en forme de bague possédant un orifice, et l'unité en forme de bague appuyant une première partie quelconque de l'unité en forme de cordon et une seconde partie quelconque de l'unité en forme de cordon l'une contre l'autre avec une pression prédéterminée, du fait que la première et la seconde partie quelconques sont positionnées pour se trouver à l'intérieur de l'orifice de l'unité en forme de bague, la seconde partie quelconque étant située sur un côté opposé du point où l'unité de pointage est disposée par rapport à la première partie quelconque, et
dans laquelle l'unité en forme de bague est susceptible d'être déplacée à coulissement le long de l'unité en forme de cordon de manière à pouvoir faire varier la dimension de la boucle.

2. La dragonne selon la revendication 1, dans laquelle l'unité en forme de cordon est susceptible d'agrandissement et de rétrécissement, et
la structure de formation de boucle fixe l'une à l'autre la première partie quelconque de l'unité en forme de cordon et la seconde partie quelconque de l'unité en forme de cordon, la seconde partie quelconque étant située sur un côté opposé du point où l'unité de pointage est disposée par rapport à la première partie quelconque.

3. La dragonne selon la revendication 1, dans laquelle l'unité de pointage présente une forme avec une partie convexe positionnée à proximité de l'unité en forme de cordon.

4. La dragonne selon la revendication 3, dans laquelle l'unité de pointage possède une forme semblable à un plateau avec une partie plane positionnée sur un côté opposé de l'unité en forme de cordon par rapport à la partie convexe.

5. La dragonne selon la revendication 1, dans laquelle l'unité de pointage est formée de manière qu'une surface de contact de l'unité de pointage où l'unité de pointage vient en contact avec la surface de panneau possède une forme sphérique.
